# EUROPEAN PATENT SPECIFICATION

(11) **EP 3 756 854 B1**
(45) Date of publication and mention of the grant of the patent: **07.02.2024**
(21) Application number: 18906807.5
(22) Date of filing: 28.12.2018
(51) Int. Cl.: B29C 49/06, B29C 49/22, B65D 1/02, B29B 11/14, B29C 49/00, B29C 49/08, B65D 23/02, B65D 81/24, B65D 83/00, B29L 9/00, B29L 31/00

(54) **DUAL-STRUCTURE CONTAINER WITH INNER BAG CONTAINER HAVING EXCELLENT REGULAR CONTRACTILITY**
DOPPELSTRUKTURBEHÄLTER MIT INNENBEUTELBEHÄLTER MIT HERVORRAGENDER REGELMÄSSIGER KONTRAKTIONSFÄHIGKEIT
CONTENANT À DOUBLE STRUCTURE DOTÉ D'UN CONTENANT DE TYPE SAC INTERNE AYANT UNE EXCELLENTE CONTRACTILITÉ RÉGULIÈRE

(30) Priority: 23.02.2018 JP 2018030820
(43) Date of publication of application: 30.12.2020
(73) Proprietor: Toyo Seikan Group Holdings, Ltd., Shinagawa-ku Tokyo 141-8627 (JP)
(72) Inventor: AKUZAWA, Norio, Yokohama-shi, Kanagawa 240-0062 (JP); ICHIKAWA, Kentarou, Yokohama-shi, Kanagawa 240-0062 (JP); IINO, Hiroki, Yokohama-shi, Kanagawa 240-0062 (JP)
(74) Representative: J A Kemp LLP
(86) International application number: PCT/JP2018/048492
(87) International publication number: WO 2019/163296

(56) References cited:
- WO-A1-01/26881
- WO-A1-2017/164225
- DE-A1- 4 400 442
- JP-A- H08 156 973
- JP-A- H09 124 051
- JP-A- 2002 264 974
- JP-A- 2002 264 974
- JP-A- 2005 047 593
- JP-A- 2005 212 392
- JP-A- 2014 234 196
- US-A1- 2018 043 604
- US-B1- 6 244 454

## Description

### Technical Field:

The present invention relates to a dual-structure container comprising an outer container and an inner bag container inserted and held in the outer container. More particularly, the present invention relates to an inner bag container preform used to produce the dual-structure container by simultaneous stretch-blow molding according to a stack preform method, and a dual-structure container obtained by using the inner bag preform.

### Background art:

A dual-structure container having a dual-structure consisting of an inner bag container and an outer container has been practically used as an airless bottle for instance, to contain a seasoning liquid like soy sauce. The airless bottle may be used in combination with a cap having a check valve. By squeezing the bottle as the outer container from the outside so as to dent the body wall, the content liquid filled in the inner bag container is discharged through an outlet formed in the cap. When discharge of the content liquid is ended by stopping the pressing of the body wall of the bottle, air is not introduced into the inner bag container due to the action of the check valve, but the air is introduced into the space between the inner bag container and the outer container through a passage different from the outlet of the cap. In this manner, the inner bag container contracts by the amount of the discharged content liquid, and thus, the inner bag container contracts every time the content liquid is discharged. An airless bottle to discharge a content liquid in this manner can discharge the content liquid little by little. Furthermore, since entry of air into the inner bag container filled with the content liquid is prevented effectively, oxidation-deterioration of the content liquid can be avoided effectively, so that the freshness of the content liquid can be kept over a long period of time.

Direct blow-molding has been mainly employed as the method for producing the dual-structure container. In this direct blow-molding, resins that are not adhesive to each other are selected as a resin for forming the outer container and as a resin for forming the inner bag container, and these resins are shaped as a container by direct blow-molding. Specifically, these resins are melt-extruded to form a dual-structure pipe. After pinching off the lower end of this pipe, a fluid is blown into this pipe to impart the pipe with a shape of bottle. However, since the steps from the melt-extrusion to the bottle-shaping are conducted at one time according to this method, it is difficult to conduct multi-cavity molding, and this can result in a low productivity. Another disadvantage is that the outer container may have a low strength.

For this reason, a method for producing a dual-structure container by stretch-blow molding has been studied recently.

Well-known examples of this method are classified roughly into a preform-in-bottle method and a stack preform method.

In the preform-in-bottle method, an outer container is formed in advance by a known stretch-blow molding process. In this outer container, an inner bag preform shaped like a test tube is inserted. Then, a fluid is fed into this inner bag preform to conduct blow-molding. In this method, the outer container serves as a blow mold and the inner bag preform is shaped as a bag-like container. In other words, in this method, stretch-blow molding of the outer container and stretch-blow molding of the inner bag container are conducted sequentially.

The stack preform method includes steps of:
inj ection-molding the outer container preform and the inner bag preform; inserting the inner bag preform into the outer container preform, thereby forming a stack preform in which the outer container preform and the inner bag preform overlap each other; retaining this stack preform in a blow mold; and feeding a blow fluid into the inner bag preform in the stack preform so as to conduct stretch-blow molding. Namely in this method, the outer container preform is shaped as a container by expansion of the inner bag preform. In other words, the stretch-blow molding of the outer container and the stretch-blow molding of the inner bag container are conducted simultaneously.

However, in the dual-structure container comprising an inner bag container and an outer container, the inner bag container may be irregularly deformed as a consequence of discharge of the content liquid contained in the inner bag container. For instance, when a certain amount of the content liquid is discharged, the bottom of the inner bag container may float to be separated from the bottom of the outer container, whereby the inner bag container contracts irregularly to cause a large number of wrinkles. As a result, the passage for discharging the content liquid is crushed to hinder the discharge of the content liquid. This type of problem may arise when a dual-structure container is produced by any of the direct blowing method, the preform-in-bottle method and the stack preform method.

For instance, Patent Document 1 discloses an inner bag container preform to be used in the preform-in-bottle method. The preform has a body and a void-forming rib provided on the outer surface of the body. In the dual-structure container formed by using such an inner bag container preform, a void is provided between the inner surface of the outer container and the outer surface of the inner bag. Therefore, when the content liquid is first discharged, the inner bag preform may contract to be rapidly separated from the inner surface of the outer container (i.e., it is excellent in initial delamination), and the content liquid can be quickly discharged. However, there remains a problem unsolved in such a dual-structure container. That is, since the inner bag container contraction caused by the discharge of the content liquid is irregular, discharge of the content liquid becomes difficult as a consequence of the discharge of the content liquid.

Patent Document 1 proposes also to provide a void-forming rib on the inner surface of the outer container preform, but even this proposal fails to solve the problem.

Patent Document 2 discloses to provide a large number of ridges on an inner bag container preform used in the stack preform method. In the dual-structure container obtained using such an inner bag container preform, a void may be formed between the inner surface of the outer container and the outer surface of the inner bag. However, since the inner bag container contraction caused by the discharge of the content liquid is irregular, there remains the same problem unsolved, i.e., discharge of the content liquid may become difficult as a consequence of the discharge of the content liquid.

Patent Document 3 proposes a process for producing a dual-structure container by a stack preform method, comprising steps of providing a protrusion and an engaging claw onto the bottom of the inner gag container preform; inserting this claw into a hole on the bottom of the outer container preform so as to link the two preforms by the engagement, and conducting simultaneous stretch blow molding in this state.

In this case, since the bottom of the inner bag container is linked to the bottom of the outer container, the inner bag container contraction caused by the discharge of the content liquid is controlled. Therefore, the process serves to effectively solve the problem that the discharge of the content liquid becomes difficult as a consequence of the discharge of the content liquid. However, since it is necessary in this process that a claw is formed on the bottom of the inner bag preform and a hole is formed on the outer container preform so as to engage with the claw, the mold for producing these preforms becomes complicated. Further, this process requires complicated operation of inserting the claw formed on the inner bag preform into the hole formed on the outer container preform for engagement, so that it may result in a serious problem of low productivity.

Patent Document 4 describes a plural preform assembly having nested preforms. The preforms are held together by an interference fit. The interference fit is provided by the friction between the preforms which occurs when the inner preform is inserted into the outer preform. At least one preform may have ribs extending radially towards the other preform. The ribs provided concentricity and interference to hold the preforms together during subsequent operations. The preforms may later be blow molded to provide a bag in bottle or similar container.

Patent Document 5 describes a changeable container that has at least one guide at the sides which engages with a corresponding holder in the outer housing so that the container is held in a stable position and does not collapse as it empties. The guide can be formed by a plastics ring injection moulded on round the container or as a dovetailed groove. The outer housing has a first part with pouring device and closure flap, and also a second part detachably connected to the first part. The inner container can be a self-supporting thin-walled foil bag.

### Prior Art Documents:

### Patent Documents:

[Patent Document 1] JP-A-2005-53513
[Patent Document 2] JP 4281454
[Patent Document 3] JP-A-2014-69875
[Patent Document 4] US 2018/043604
[Patent Document 5] DE 4400442

### Summary of the Invention:

### Problems to be Solved by the Invention:

Therefore, it is an object of the present invention to provide a dual-structure container for solving effectively a problem that discharge of a content liquid becomes difficult as a consequence of the discharge of the content liquid, and this effect is obtainable by controlling contraction of the inner bag container.

Another object of the present invention is to provide an inner bag preform that can be used for producing the dual-structure container by the stack preform method, without using a complicated mold or without applying any complicated processes such as engagement between a claw and a hole.

### Means for Solving the Problems:

The present inventors carried out many experiments on the stack preform method known as a method for producing the dual-structure container and reviewed the experiments, thereby obtaining an unexpected result that this method enables to decrease partially the thickness of the stretch-molded part (body) of the inner bag preform, i.e., to form a deep groove. By conducting simultaneous stretch-blow molding using the deep groove, a thin portion is formed on the inner bag container. The thin portion serves to control the contraction caused by the discharge of the content liquid. The inventors have found that the thus obtained dual-structure container can solve effectively the problem of difficulty in the content liquid discharge that may occur as a consequence of the discharge of the content liquid, thereby arriving at the present invention.

The present invention provides an inner bag container preform to be used in production of a dual-structure container by simultaneous stretch-blow molding according to a stack preform method. The dual-structure container comprises an outer container and an inner bag container housed in the outer container.

The inner bag container preform is shaped as a whole like a test tube having a neck to be positioned within a mouth that is an unstretch-molded part of the outer container preform when the inner bag container preform is housed within the outer container preform, a body connecting to the neck and a bottom to close the lower end of the body.

Further, contraction-control grooves are formed at a plurality of sites at intervals in the circumferential direction on the inner surface or the outer surface of the body, the grooves extend linearly in the axial direction, and the minimal thickness t at the contraction-control grooves is not more than 80% of the thickness T at a part other than the grooves when viewed in a plan cross section of the body.

It is preferable that the inner bag container preform of the present invention has a structure or a feature as follows:
(1) the minimal thickness t at the contraction-control grooves is not less than 200 um;
(2) the width w at the contraction-control grooves is in a range of 0.2 to 8 mm when viewed in a plan cross section of the body;
(3) the plurality of contraction-control grooves are arranged point-symmetrically when viewed in a plan cross section of the body;
(4) the plurality of contraction-control grooves are formed at two to four sites when viewed in a plan cross section of the body;
(5) the contraction-control grooves have an axial length L of not less than 30% with respect to height H of the body; and
(6) the contraction-control grooves are formed on the inner surface of the body.

The present invention provides a dual-structure container comprising an inner bag container and an outer container formed by simultaneous stretch-blow molding according to a stack preform method using an inner bag container preform according to the present invention and an outer container preform.

The dual-structure container has a body on which contraction-control thin portions are formed, at a plurality of sites at intervals in the circumferential direction, and the contraction-control thin portions extend like strips in the axial direction.

It is preferable in the dual-structure container that: (7) the minimal thickness t' at the contraction-control thin portions is not more than 70% of the thickness T' at a part other than the thin portions when viewed in a plan cross section. Effect of the Invention:

The inner bag container preform of the present invention is used to produce a dual-structure container by a stack preform method. That is, a stack preform used here is assembled by inserting the inner bag container preform into an outer container preform and holding the inner bag container preform therein. This stack preform is placed in a blow mold. A stretch rod is suitably inserted into the inner bag container preform and stretched uniaxially. Further, a blow fluid (e.g., compressed air) is fed into the inner bag container preform to expand the preform in the circumferential direction (i.e., simultaneous blow stretching) . In this manner, the inner bag container preform is thinned due to the expansion in close contact with the inner surface of the outer container preform, so that it is shaped as an inner bag container. The outer container preform is expanded and thinned with the expansion of the inner bag container preform that is in close contact with the inner surface of the outer container preform, and is shaped as an outer container by use of the blow mold. In this manner, a dual-structure container comprising an outer container and an inner bag container housed and held in the outer container is obtained.

Both the inner bag container preform and the outer container preform have a test tube shape as a whole. The inner bag container preform has a neck, a body and a bottom. When the inner bag container preform is inserted into the outer container preform and held therein, the neck is positioned within the mouth as the unstretch-molded part of the outer container preform, the body continues to the neck, and the bottom closes the body. Namely, during the simultaneous stretch blow molding together with the outer container preform, the body and the bottom of the inner bag container preform are stretch-molded. The inner bag container preform of the present invention has the basic structure as mentioned above, and according to the present invention, a plurality of contraction-control grooves are formed on the body of the inner bag container preform. The grooves extending linearly in the axial direction are formed at a plurality of sites at intervals in the circumferential direction. This is an important feature of the present invention.

When the simultaneous stretch blow molding described above is conducted using the inner bag container preform with the contraction-control grooves formed thereon, the part of the grooves of the obtained inner bag container becomes thinner than the other part. Namely, the inner bag container will have contraction-control thin portions of the thin contraction-control grooves.

Specifically, the plurality of contraction-control thin portions are formed at intervals and in the circumferential direction on the inner bag container. These portions extend in the axial direction of the container, and their thickness is considerably decreased in comparison with the remaining part. Therefore, the inner bag container contraction caused by the discharge of the content liquid housed in the inner bag container causes deformation originated from the contraction-control thin portions extending in the axial direction. As a result, the present invention can prevent the phenomenon that may be observed in the conventional techniques. The phenomenon is that the bottom of the inner bag container floats considerably and the inner bag container contracts irregularly due to the contraction as a consequence of the discharge of the content liquid, thereby causing a large number of wrinkles. In the present invention, there is substantially no concern that the passage for the content liquid is blocked, and this allows stable discharge of the content liquid.

It should be noted here that the contraction-control thin portions formed on the inner bag can be provided only by the stack preform method but not by the preform-in-bottle method.

Since the contraction-control thin portions are expected to be the origin of deformation at the time of the contraction, there should be a considerable difference in the thickness between these portions and the remaining part. If this thickness difference is small, during the contraction and deformation of the inner bag container, which is caused by the discharge of the content liquid, the remaining part may be deformed substantially simultaneously, and as a result, the effect of controlling contraction cannot be exhibited. Therefore, in order to form thin portions having such a thickness difference, there is a necessity of forming thin portions, specifically grooves, on the stretch-molded part of the inner bag container preform to be used for forming the inner bag container (body). The thickness difference between the grooves and the remaining part should be set greater. When such an inner bag container preform with grooves having such a great difference in thickness is independently stretch blow molded as in the preform-in-bottle method, the significantly thin grooves are stretched greatly, resulting in molding defects such as breakage. That is, since there is a limitation for the thickness of the grooves, it is impossible to form contraction-control thin portions.

On the other hand, in the case of producing a dual-structure container by simultaneous stretch blow molding according to the stack preform method, the stretch-molded part (body) of the inner bag container preform is brought into close contact with the inner surface of the outer container preform and stretched by expansion in a state integrated with the outer container preform. Therefore, even if grooves having a large thickness difference from the other part are formed on the inner bag container preform, the inner surface at the body of the outer container preform relaxes the stretch limited to the groove portions, and the grooves are expanded and thinned equally to the part other than the grooves, and as a result, molding failure such as breakage is effectively suppressed. In other words, it is possible to form grooves having a large thickness difference on the body (stretch-molded part) of the inner bag container preform so as to form contraction-control thin portions.

The linear grooves extending in the axial direction can be replaced by ridges formed on the body of the inner bag container preform, in particular on the outer surface. In this case, thick portions to correspond to the ridges will be formed on the inner bag container obtained by blow molding. The thick portions may be useful to form a void between the outer container and the inner bag container, but it does not exhibit the effect of controlling the contraction. That is, these portions are rarely deformed. Contraction-deformation caused by the discharge of the content liquid arises in a large area other than the thick portions, and thus, irregular contraction-deformation may be inevitable.

Thus, the dual-structure container obtained by the stack preform method using the inner bag container preform of the present invention can effectively control contraction-deformation of the inner bag container, which may be caused by the discharge of the content liquid, whereby irregular deformation is prevented. Therefore, the disadvantage that the passage for discharging the content liquid is blocked is effectively avoided, and it is possible to stably conduct the discharge of the content liquid.

Further, in the present invention, except for using the inner bag container preform having a stretch molded part (body) with grooves, it is possible to form the dual-structure container by the conventionally known stack preform method, without using any special embodiment of preform having a claw or a hole. Moreover, when assembling the stack preform, it is not necessary to conduct complicated operations such as engagement between the claw and the hole. Therefore, the present invention is extremely advantageous in terms of productivity, manufacturing cost, and the like.

### Brief Description of the Drawings:

[Fig. 1] : a set of schematic side cross-sectional views showing an inner bag container preform, an outer container preform and a stack preform assembled from these preforms to be used in production of a dual-structure container of the present invention, comprising: Fig. 1(a) showing an inner bag container preform, Fig. 1(b) showing an outer container preform, and Fig. 1(c) showing a stack preform;
[Fig. 2] : a plan cross-sectional view taken along a line A-A of the inner bag container preform in Fig. 1;
[Fig. 3]: a schematic side cross-sectional view of a dual-structure container of the present invention, obtained by simultaneous stretch blow molding according to a stack preform method;
[Fig. 4]: a plan cross-sectional view taken along a line B-B of the inner bag container in Fig. 3;
[Fig. 5]: a set of views showing contraction-deformation of an inner bag container of a dual-structure container at the time of discharge of a content liquid, comprising: Fig. 5(a) as a schematic side view showing contraction-deformation of the inner bag container provided with contraction-control thin portions according to the present invention, and Fig. 5(b) as a schematic plan sectional view thereof;
[Fig. 6]: a schematic side view showing contraction-deformation of an inner bag container that is not provided with contraction-control thin portions; and
[Fig. 7]: a set of plan cross-sectional views showing other arrangement patterns of a plurality of contraction-control thin portions formed on the inner bag container of Fig. 3, and examples of deformation of the inner bag container formed in accordance with the patterns.

### Mode for Carrying Out the Invention:

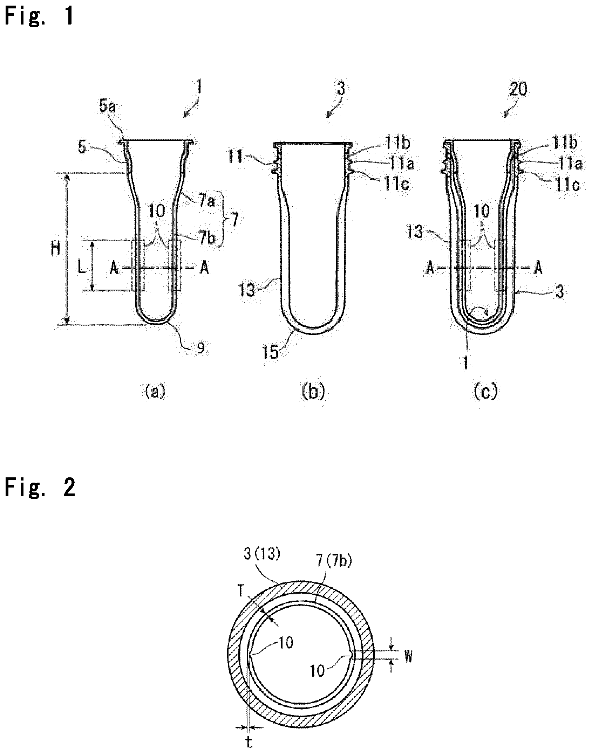

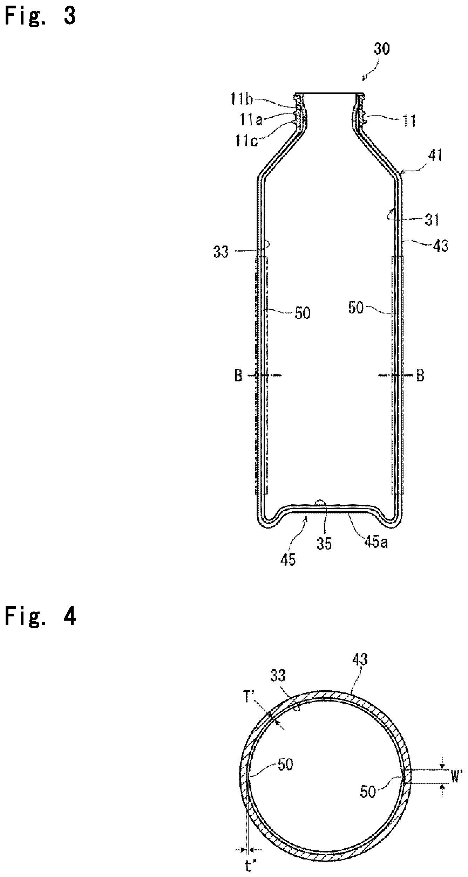

Fig. 1 shows a dual-structure container of the present invention. This container is obtained by the stack preform method using an inner bag container preform 1 (see Fig. 1(a)) and an outer container preform 3 (see Fig. 1(b)). That is, the inner bag container preform 1 (hereinafter, this may be simply referred to as inner preform) is inserted into the outer container preform 3 (hereinafter, this may be simply referred to as outer preform) to form a stack preform 20 (see Fig. 1(c)), and this stack preform is stretch blow molded so that the inner preform 1 and the outer preform 3 are simultaneously stretch blow molded, whereby the dual-structure container shown in Fig. 3 as described later is produced.

As clearly shown in Fig. 1, both the inner preform 1 and the outer preform 3 have a test tube shape as a whole. They are shaped by injection molding.

The inner preform 1 of the present invention has a neck 5, a body 7 that connects to the neck 5, and a bottom 9 that closes the lower end of the body 7. The outer preform 3 to house the inner preform 1 has a mouth 11, a body 13 that connects to the neck 11, and a bottom 15 that closes the lower end of the body 13. The mouth 11 is a fixed part not to be stretch molded (unstretch-molded part) while the body 13 and the bottom 15 are formed by stretch-molding.

In the stack preform 20, the neck 5 of the inner preform 1 is to be positioned within the mouth 11 that is not stretch blow molded. In other words, in the inner preform 1, the body 7 connecting to the neck 5 and the bottom 9 correspond to regions to be stretch-molded. In the form of the stack preform 20, when a void is present between the outer surface of the neck 5 and the inner surface of the mouth 11, stretch-molding may start from the void.

In Fig. 1, the unstretch-molded parts in the inner preform 1 and the outer preform 3 are indicated by hatching.

In the stack preform 20, the upper part of the neck 5 of the inner preform 1 may be fit-fixed firmly within the mouth 11 of the outer preform 3. At its upper end, a circumferential flange 5a extending outward is formed. This circumferential flange 5a engages the upper end of the mouth 11, so that the inner preform 1 is positioned not to be inserted deeper than required.

On the outer surface of the mouth 11 as an unstretch-molded part of the outer preform 1, a screw 11a for mounting a cap having a check valve is provided. On the upper part of the screw 11a, an air inlet 11b is formed. Through the air inlet 11b, air is introduced into the gap between the inner bag container and the outer container of the dual-structure container to be finally molded, so that the operation for discharging the content liquid filled in the inner bag container can be quickly conducted.

Furthermore, on the lower part of the screw 11a, a support ring 11c is provided to be used as a gripping member during transportation of the outer preform 3 and the stack preform 20, for instance. When the cap having the check valve is mounted, the cap abuts against the upper surface of the support ring 11c, so that air can be introduced through the air inlet 11b into the gap between the inner bag container and the outer container of the dual-structure container to be finally molded, and substantially no air leakage occurs.

Concerning the inner preform 1 and the outer preform 3, it is possible to configure the neck 5 of the inner preform 3 to protrude from the mouth 11 of the outer preform 3. It is also possible to provide a screw 11a on the outer surface at the protruded part of the neck 5 for the purpose of engagement with the cap having a check valve. Further, it is possible to omit the screw 11b when the cap having the check valve can be fit-fixed without screw engagement.

The outer surface at the body 7 of the inner preform 1 has a tapered portion 7a reduced in diameter from its upper end (a part connecting to the mouth 5) downward. The tapered portion 7a extends downward and connects to a straight body portion 7b. This embodiment allows the inner preform 1 to be quickly inserted into the outer preform 3 and fit-fixed at the upper part of the mouth 5.

The stack preform 20, which is formed by inserting the inner preform 1 into the outer preform 3 and fit-fixing, is held in a blow mold. This is heated to a temperature to enable blow molding (not lower than the glass transition temperature and lower than the melting point of the resin that forms the preform) . In the inner preform 1, a stretch rod is inserted suitably, stretched uniaxially, and then, a blow fluid like compressed air is fed into the inner preform 1 so as to expand and stretch it in the circumferential direction, thereby obtaining a desired dual-structure container.

Here, the stretch-molded parts of the inner preform 1 (the body 7 and the bottom 9) are stretch-molded in a close contact with the inner surface of the stretch-molded parts of the outer preform 3 (the body 13 and the bottom 15) . The outer preform 3 is pressed to spread by the inner preform 1 so as to be stretched, and shaped as a container by use of the blow mold. At this time, the inner preform 1 is shaped as a bag container according to the inner surface of the outer preform 3.

A plurality of contraction-control grooves 10 are formed on the inner surface of the body 7 as a stretch-molded part of the present invention, as shown in the plan cross-sectional view of Fig. 2. On this body 7, in particular on the inner surface of the straight body portion 7b, two contraction-restricting grooves (10, 10) extending in the axial direction are formed so as to face each other in the radial direction. In Fig. 1, the part where the grooves are formed are illustrated as a region surrounded by a dash-dotted line.

There is a great difference in thickness between these contraction-control grooves 10 and the remaining part. As a result, it is possible to form thin parts on the body of the inner bag container obtained by stretch blow molding the inner preform 1. The thin parts regularly control the contraction-deformation caused by discharge of the content liquid filled in the inner bag container. The thin part and contraction-deformation will be described later.

In the present invention, the minimal thickness t of the contraction-control grooves 10 is not more than 80%, in particular not more than 70% of the thickness T of the part other than the grooves 10. In other words, the thickness of the thin portions differs greatly from the remaining part. When the minimal thickness t of the grooves 10 is greater than the above range with respect to the thickness T of the other part, it becomes difficult to form a contraction-control thin portion for regularly controlling the contraction-deformation on the inner bag container.

It should be noted that the contraction-control grooves 10 having a large thickness difference from the other part can form the contraction-control thin portions on the inner bag container only when the inner preform 1 and the outer preform 3 are simultaneously stretch-blow molded by the stack preform method. It is impossible to form such a contraction-control thin portions on the inner bag container by any other method because breakage may occur at the grooves 10 during stretch blow molding of the inner preform 1. In the stack preform method, when the inner preform 1 is expanded and deformed by stretch blow molding, the inner surface at the body 13 of the outer preform 3 is always in close contact with the outer surface at the body 7 of the inner preform 1. As a result, breakage at the grooves 10 is effectively prevented, making it possible to form the contraction-control thin portions on the inner bag container.

If the minimal thickness t of the grooves 10 is excessively decreased, breakage is liable to occur at the time of stretch blow molding. Therefore, it is desirable that the minimal thickness t is 200 um or more, particularly 500 um or more.

In the present invention, it is preferable that the width w of each of the contraction-control grooves 10 is preferably in the range of 0.2 to 8 mm in the plan cross section of the body. That is, if the width w is increased or decreased more than necessary, the width of the contraction-control thin portions derived from the grooves 10 formed on the inner bag container is increased or decreased, and there is a tendency that it becomes difficult to regularly control the contraction-deformation caused by the discharge of the content liquid.

Though there is no particular limitation, axial length L of the contraction-control grooves 10 is typically 30% or more, in particular 50% or more with respect to height H. Here, height H indicates the length of a part of the body as a stretch molded part positioned below the lower end of the mouth 11 of the outer preform 3 in the stack preform 20. This is suitable for regularly and entirely controlling the contraction caused by the discharge of the content liquid.

It is preferable that the contraction-control grooves 10 are positioned particularly closer to the bottom 9. For instance, as shown in Fig. 1, preferably it is formed at the straight body portion 7b. In this manner, it is possible to more reliably prevent irregular contraction-deformation caused by the discharge of the content liquid. An example of the irregular deformation is that the bottom of the bag-like container floats upwards.

Though the contraction-control grooves 10 in the example of Fig. 1 are formed on the inner surface at the body 7, such grooves can be formed also on the outer surface at the body 7. In the case of increasing the depth of the grooves 10 so as to increase the difference in thickness from the other part, the grooves 10 are preferably formed on the inner surface at the body 7 from the viewpoint of injection moldability or the like of the inner preform 1. Formation of the grooves 10 on the inner surface is preferable also from the viewpoint of effectively preventing breakage at the grooves 10.

Though the contraction-control grooves 10 in the example shown in Figs. 1 and 2 are provided at two sites facing each other in the radial direction, more than two of such contraction-control grooves 10 can be provided. Such a large number of contraction-control grooves 10 are preferably provided at point-symmetrical positions on the plan cross section, from the viewpoint of further regularly controlling the contraction-deformation caused by the discharge of the content liquid. It is most preferable in the present invention that two to four contraction-control grooves 10 are distributed point-symmetrically in the circumferential direction.

The entire dual-structure container of the present invention is shown Figs. 3 and 4. This dual-structure container 30 is obtained by stretch blow molding the stack preform 20 comprising the inner preform 1 and outer preform 3, and it comprises the inner bag container 31 formed of the inner preform 1 and the outer container 41 formed of the outer preform 3.

In these containers 31 and 41, the neck 5 of the inner preform 1 and the mouth 11 of the outer preform 3 are parts substantially not to be stretch-molded, and thus, these parts substantially do not change their shapes.

For instance, the inner bag container 31 has the neck 5, the body 33 and the bottom 35 both of which are deformable. The body 33 and the bottom 35 are shaped by stretch blow molding.

The outer container 41 has the mouth 11, the body 43 and the bottom 45. The body 43 and the bottom 45 are parts shaped by stretch blow molding. From the viewpoint of self-supporting or the like of the container, a raised bottom 45a is formed usually at the center of the bottom 45, such that the periphery of the bottom 45 serves as a grounding part. In the initial state immediately after the blow molding, the body 33 and the bottom 35 of the inner bag container 31 are held in a close contact with the inner surface of the outer container 41.

In the dual-structure container 30 of the present invention, two contraction-control thin portions 50 are formed on the body 33 of the inner bag container 31, and the thin portions 50 face each other in the radial direction. In Fig. 3, the parts of the thin portions 50 are shown as regions surrounded by a dash-dotted line.

That is, the contraction-control thin portions 50 are formed by stretching the contraction-control grooves 10 formed in the inner preform 1 shown in Fig. 1. Therefore, the contraction-control thin portions 50 are formed at two sites facing each other in the radial direction, and these thin portions 50 extend like strips in the axial direction.

The contraction-control thin portions 50 of the present invention are considerably different in thickness from the other part, namely, the portions 50 are extremely thin. The contraction-control thin portions 50 can be formed only by using the inner bag container preform 1 having the contraction-control grooves 10 with a difference in thickness and by conducting simultaneous stretch blow molding according to the stack preform method.

That is, in the dual-structure container 30 of the present invention, the inner bag container 31 is filled with the content liquid. By pressing the body 43 of the outer container 41, the body 33 of the inner bag container 31 is also pressed to discharge the content liquid. When this pressing is stopped, the body 43 of the outer container 41 recovers its original shape. At this time, since the pressure between the body 33 of the bag-like container 31 and the body 43 of the outer container 41 becomes negative, the air inlet 11b may flow in from the valve of the cap having a check valve, while no air may flow into the bag-like container 31. As a result, oxidation-deterioration of the content liquid is effectively prevented, and the quality of the content liquid can be maintained effectively. As mentioned above, with the discharge of the content liquid, the bag-like container 31 contracts. Then, by pressing the body 43 of the outer container 41, the content liquid is discharged again.

The body 33 of the inner bag container 31 contracts as the content liquid is discharged as described above. Since the contraction-control thin portions 50 are formed in the present invention, the deformation due to the contraction is controlled to be regular, so that disadvantages such as crush of the content liquid passage, which is caused by the contraction-deformation, can be avoided effectively.

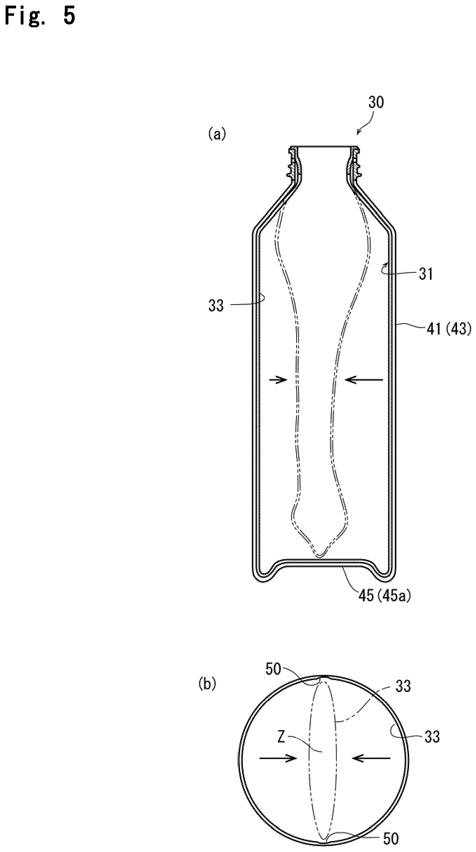

Fig. 5 shows an example of contraction-deformation of the body 33. In the present invention, contraction-deformation in the present invention occurs from the contraction-control thin portions 50 formed as ridge lines to face each other in the radial direction. Therefore, deformation occurs regularly so that the part will be folded linearly. As a result, a space Z serving as a discharge passage for the content liquid is maintained in the middle of the deformed body 33.

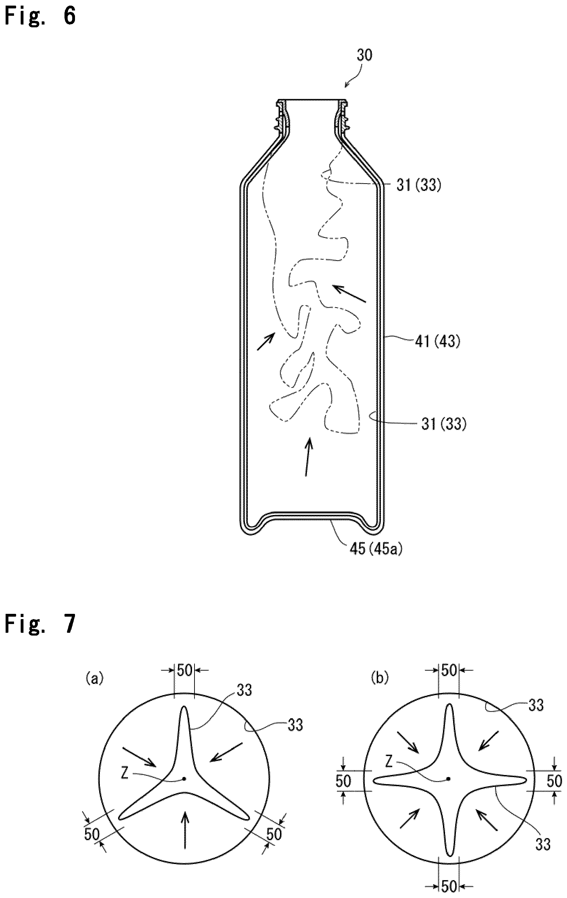

On the other hand, Fig. 6 shows an example where the contraction-control thin portions 50 are not formed. In this case, since the entire body 33 is deformed at once, for instance, the body 33 will be considerably floated from the bottom 45 of the outer container 41, thereby being contracted significantly irregularly. As a result, the passage for the content liquid is crushed to make it difficult to discharge the content liquid.

In the present invention, the contraction-control thin portions 50 and the contraction-control grooves 10 formed on the inner preform 1 in order to form the thin portions 50 are formed at two sites to face each other in the radial direction. As explained for the contraction-control grooves 10, the number of these grooves 10 and the thin portions 50 can be three or more. For further regular deformation-contraction, these are preferably arranged point-symmetrically in the circumferential direction.

Fig. 7 consists of schematic views each showing patterns of the thin portions 50 formed when three or four contraction-control grooves 10 are arranged point-symmetrically, and their contract-deformed states.

As can be understood from these figures, in either case, since the contraction-deformation occurs with regard to the contraction-control thin portions 50 as the ridge lines that are considerably deformable in comparison with the other part, the space Z serving as the passage for discharging the content liquid is maintained in the middle, so that the discharge of the content liquid can be conducted smoothly.

In order to maintain the regular contraction-deformation, it is required to provide a large difference in thickness between the thin portions 50 and the other part. For this purpose, the deep grooves (contraction-control grooves 10) having a certain thickness difference are formed on the body 7 of the inner preform 1. The minimal thickness t of the contraction-control grooves 10 is 80% or less, in particular 70% or less of the thickness T of the other part. These contraction-control grooves 10 are stretched by blow molding so that the contraction-control thin portions 50 extending like a strip in the axial direction is formed. The minimal thickness t' of the contraction-control thin portions 50 is 70% or less, in particular 60% or less with respect to the thickness T' of the other part, namely, there is a large difference in thickness from the other part, and thus, it is possible to control the contraction-deformation caused by the discharge of the content liquid.

Here, the rate of the minimal thickness t' of the thin portions 50 with respect to the thickness T' of the other part is slightly smaller than the rate of the minimal thickness t of the contraction-control grooves 10 with respect to the thickness T of the other part, because the thickness at contraction-control grooves 10 is further decreased in comparison with the other part as a result of the stretch-blowing. Similarly, the width w' at the thin portions 50 is greater than the width w of the contraction-control grooves 10 because the thickness is decreased in accordance with the stretching ratio in the circumferential direction. Therefore, the condition of the stretch blow (stretching ratio in the circumferential direction) is set in order to prevent the width w' from increasing more than necessary. For instance, the stretch ratio in the circumferential direction is set in accordance with the width w of the contraction-control grooves 10 such that the width w' will be in the range of about 3 to about 30 mm.

After filling the inner bag container 31 with the content liquid, the dual-structure container of the present invention is fitted with a cap having a check valve known per se, and used.

In the present invention, the inner bag container preform 1 for forming the inner bag container 31 and the outer container preform 3 for forming the outer container 41 can be formed of various thermoplastic resins as long as the resins can be blow-molded.

Examples of the thermoplastic resin are as follows:
olefinic resins such as low density polyethylene, high density polyethylene, polypropylene, poly1-butene, poly4-methyl-1-pentene or α-olefins such as ethylene, propylene, 1-butene and 4-methyl-1-pentene random or block copolymers, and cyclic olefin copolymers;
ethylene·vinyl-based copolymers, such as ethylene·vinyl acetate copolymer, ethylene·vinyl alcohol copolymer, and ethylene·vinyl chloride copolymer;
styrenic resins such as polystyrene, acrylonitrile·styrene copolymer, ABS, and α-methylstyrene·styrene copolymer;
vinyl resins such as polyvinyl chloride, polyvinylidene chloride, vinyl chloride·vinylidene chloride copolymer, polymethyl acrylate, and polymethyl methacrylate;
polyamide resins such as nylon 6, nylon 6-6, nylon 6-10, nylon 11, and nylon 12;
polyester resins such as polyethylene terephthalate (PET), polybutylene terephthalate, polyethylene naphthalate, and copolyesters thereof;
polycarbonate resins;
polyphenylene oxide resins; and
biodegradable resins such as polylactic acid.

A blend of these thermoplastic resins can also be used as a base resin as long as the moldability is not impaired.

The thermoplastic resin particularly suitably used in the present invention is a polyester-based resin and an olefinic resin. Since air flows into the gap between the inner bag container 31 and the outer container 41 in use, moisture and gas barrier properties are not always required for the outer preform 3 for forming the outer container 3. Polylactic acid having low moisture and gas barrier properties can also be suitably used.

In order to impart a gas barrier property to the inner bag container 31 and the outer container 41 to be molded, the inner preform 1 and the outer preform 3 to be used for forming these containers can have a multilayer structure.

For instance, as an intermediate layer between the inner and outer layers formed from the aforementioned polyester-based resin and the olefinic resin (or polylactic acid) or the like, a gas barrier layer formed by using a gas barrier resin such as an ethylene vinyl alcohol copolymer (ethylene vinyl acetate copolymer saponified product) and an aromatic polyamide is preferably provided. Most preferably, a gas barrier layer of an ethylene vinyl alcohol copolymer is provided. That is, an oxygen barrier property can be imparted by providing a gas barrier layer as an intermediate layer. In particular, the ethylene vinyl alcohol copolymer exhibits particularly excellent oxygen barrier property, so that oxidation-deterioration of the contents due to oxygen permeation can be effectively suppressed, and excellent content shelf life can be secured.

In addition, in a case of providing a gas barrier layer as described above, an adhesive resin layer can be provided in order to enhance adhesion to the inner and outer layers and prevent delamination, so that the gas barrier layer of the intermediate layer can be firmly adhered and fixed to the inner and outer layers. The adhesive resin used for forming such an adhesive resin layer is known per se. For instance, a resin used for this purpose contains a carbonyl group (>C=O) in a main chain or a side chain in an amount of 1 to 100 meq/100g resin, especially 10 to 100 meq/100g resin. Specific examples thereof include: an olefin resin graft-modified with a carboxylic acid such as maleic acid, itaconic acid, fumaric acid or an anhydride, amide, and ester; an ethylene-acrylic acid copolymer; an ion-crosslinked olefinic copolymer; and an ethylene-vinyl acetate copolymer.

Since the aforementioned dual-structure container of the present invention does not require a mold of a complex structure and its stack preform can be easily assembled, it is excellent in productivity. Further, it can discharge the content liquid smoothly and continuously to effectively suppress the content liquid from remaining in the inner bag container. In addition to that, high freshness can be maintained over a long period of time, and the content liquid can be dispensed little by little. Therefore, the container of the present invention is extremely useful as a container for a seasoning liquid like soy sauce.

### Examples:

Excellent effects of the present invention will be described with reference to the following experimental examples.

A commercially available PET resin for bottle (intrinsic viscosity: 0.84 dl/g) sufficiently dried in a dehumidifying dryer was supplied to a hopper of an injection molding machine to obtain a preform for molding an outer container having a test tube shape and a preform for molding an inner bag container having a test tube shape. A plurality of contraction-control grooves were formed axis-symmetrically on the inner surface of the inner bag container preform. The shape and number of grooves are shown in Table 1.

**[Table 1]**

| | T | t | w | Groove | L | T' | t' | W' | Contraction control | Contraction cross section |
|---|---|---|---|---|---|---|---|---|---|---|
| | mm | mm | mm | Number | % | µm | µm | mm | | |
| Shape 1 | 1.5 | 1 | 4 | 2 | 65 | 104 | 63 | 26 | ○ | Straight |
| Shape 2 | 1.5 | 1.4 | 2.5 | 3 | 65 | 95 | 88 | 15 | × | Random |
| Shape 3 | 1.5 | 1 | 2.5 | 3 | 65 | 98 | 60 | 20 | ○ | Triangle |
| Shape 4 | 1.5 | 0.75 | 2.5 | 3 | 65 | 105 | 45 | 25 | ○ | Triangle |
| Shape 5 | 1.5 | 0.75 | 4 | 4 | 65 | 101 | 42 | 21 | ○ | Quadrangle |

The inner bag container preform was inserted into the outer container preform so as to obtain a stack preform. The stack preform was heated by using a quartz heater and a heating iron core, and then, it was blow-molded to obtain a cylindrical bottle with an internal volume of about 400 ml. The stretch ratio was 2.5 times in the longitudinal direction and 2.5 times in the circumferential direction for the outer layer preform, 2.7 times in the longitudinal direction and 4.2 times in the circumferential direction for the inner layer preform.

In the inner bag of the thus-obtained dual-structure container, contraction-control thin portions corresponding to the shape and the number of the contraction-control grooves formed on the inner bag container preform were formed. Table 1 shows the thickness and the width of the contraction-control thin portions. Further, Table 1 shows whether the contraction is controlled at the time of squeezing the obtained dual-structure container so as to discharge the content by contracting the inner bag. The controlled contraction shapes are also shown in Table 1.

Shape 2 refers to an example of forming small contraction-control grooves. In this case, the entire inner bag contracted at one time similarly to a case of an inner bag with no groove. The inner bag was folded completely randomly, and this caused blockage of the passage for the content liquid.

When large contraction-control grooves were formed as in Shape 1 and Shape 3-5, the folding started at the contraction-control thin portions of the molded bottle. The inner bag contracted with the contraction-control thin portions as ridge lines, and no blockage of the passage for the content liquid occurred.

### Explanations of Letters or Numerals:

1: Inner bag container preform (inner preform)
3: Outer container preform (outer preform)
5: Neck of inner preform or neck of inner bag container
7: Body of inner preform
9: Bottom of inner preform
10: Contraction-control grooves
11: Mouth of outer preform or mouth of outer container
11b: Air inlet
20: Stack preform
30: Dual-structure container
31: Inner bag container
33: Body of inner bag container
35: Bottom of inner bag container
41: Outer container
43: Body of outer container
45: Bottom of outer container
50: Contraction-control thin portions

## Claims

1. An inner bag container preform (1) to be used in production of a dual-structure container (30) by simultaneous stretch-blow molding according to a stack preform method, the dual-structure container (30) including an outer container (41) and an inner bag container (31) housed in the outer container (41),
the inner bag container preform (1) is shaped as a whole like a test tube having a neck (5) to be positioned within a mouth (11) that is an unstretch-molded part of the outer container preform (3) when the inner bag container preform (1) is housed within the outer container preform (3), a body (7) connecting to the neck (5) and a bottom (9) to close the lower end of the body (7), and
contraction-control grooves (10) are formed at a plurality of sites at intervals in the circumferential direction on the inner surface or the outer surface of the body (7), and the grooves extend linearly in the axial direction, and wherein the minimal thickness t at the contraction-control grooves (10) is not more than 80% of the thickness T at a part other than the grooves when viewed in a plan cross section of the body (7).

2. The inner bag container preform (1) according to claim 1, wherein the minimal thickness t at the contraction-control grooves (10) is not less than 200 um.

3. The inner bag container preform (1) according to claim 1, wherein the width w at the contraction-control grooves (10) is in a range of 0.2 to 8 mm when viewed in a plan cross section of the body (7).

4. The inner bag container preform (1) according to claim 1, wherein the plurality of contraction-control grooves (10) are arranged point-symmetrically when viewed in a plan cross section of the body (7).

5. The inner bag container preform (1) according to claim 1, wherein the plurality of contraction-control grooves (10) are formed at two to four sites when viewed in a plan cross section of the body (7).

6. The inner bag container preform (1) according to claim 1, wherein the contraction-control grooves (10) have an axial length L of not less than 30% with respect to height H of the body (7).

7. The inner bag container preform (1) according to claim 1, wherein the contraction-control grooves (10) are formed on the inner surface of the body (7).

8. A dual-structure container (30) including an inner bag container (31) and an outer container (41) formed by simultaneous stretch-blow molding according to a stack preform method using an inner bag container preform (1) according to any one of claims 1 to 7 and an outer container preform (3),
the dual-structure container (30) has a body (33) on which contraction-control thin portions (50) are formed at a plurality of sites at intervals in the circumferential direction, and the contraction-control thin portions (50) extend like strips in the axial direction.

9. The dual-structure container (30) according to claim 8, wherein the minimal thickness t' at the contraction-control thin portions (50) is not more than 70% of the thickness T' at a part other than the thin portions when viewed in a plan cross section.

## Patentansprüche

1. Vorformling (1) für einen Innenbeutelbehälter für die Verwendung bei der Herstellung eines Doppelstrukturbehälters (30) durch gleichzeitiges Streckblasen gemäß einem Stapelvorformverfahren, wobei der Doppelstrukturbehälter (30) einen äußeren Behälter (41) und einen Innenbeutelbehälter (31) beinhaltet, der in dem äußeren Behälter (41) untergebracht ist,
der Vorformling (1) für einen Innenbeutelbehälter als ein Ganzes wie ein Reagenzglas mit einem Hals (5), der innerhalb einer Öffnung (11) zu positionieren ist, die ein nicht dehnbar geformter Teil des Vorformlings (3) für einen äußeren Behälter ist, wenn der Vorformling (1) für einen Innenbeutelbehälter innerhalb des Vorformlings (3) für einen äußeren Behälter untergebracht ist, einem Körper (7), der mit dem Hals (5) verbunden ist, und einem Boden (9) zum Verschließen des unteren Endes des Körpers (7) geformt ist, und
Kontraktionskontrollnuten (10) an einer Mehrzahl von Stellen in Abständen in der Umfangsrichtung auf der inneren Oberfläche oder der äußeren Oberfläche des Körpers (7) ausgebildet sind und sich die Nuten linear in der axialen Richtung erstrecken, und wobei die minimale Dicke t an den Kontraktionskontrollnuten (10) nicht mehr als 80 % der Dicke T eine anderen Teils als die Nuten beträgt, wenn in einem Draufsichtquerschnitt des Körpers (7) betrachtet.

2. Vorformling (1) für einen Innenbeutelbehälter nach Anspruch 1, wobei die minimale Dicke t an den Kontraktionskontrollnuten (10) nicht weniger als 200 µm beträgt.

3. Vorformling (1) für einen Innenbeutelbehälter nach Anspruch 1, wobei die Breite w an den Kontraktionskontrollnuten (10) in einem Bereich von 0,2 bis 8 mm liegt, wenn in einem Draufsichtquerschnitt des Körpers (7) betrachtet.

4. Vorformling (1) für einen Innenbeutelbehälter nach Anspruch 1, wobei die Mehrzahl der Kontraktionskontrollnuten (10) punktsymmetrisch angeordnet sind, wenn in einem Draufsichtquerschnitt des Körpers (7) betrachtet.

5. Vorformling (1) für einen Innenbeutelbehälter nach Anspruch 1, wobei die Mehrzahl von Kontraktionskontrollnuten (10) an zwei bis vier Stellen ausgebildet sind, wenn in einem Draufsichtquerschnitt des Körpers (7) betrachtet.

6. Vorformling (1) für einen Innenbeutelbehälter nach Anspruch 1, wobei die Kontraktionskontrollnuten (10) eine axiale Länge L von nicht weniger als 30 % in Bezug auf die Höhe H des Körpers (7) aufweisen.

7. Vorformling (1) für einen Innenbeutelbehälter nach Anspruch 1, wobei die Kontraktionskontrollnuten (10) an der inneren Oberfläche des Körpers (7) ausgebildet sind.

8. Doppelstrukturbehälter (30), der einen Innenbeutelbehälter (31) und einen Außenbehälter (41) beinhaltet, die durch gleichzeitiges Streckblasformen gemäß einem Stapelvorformverfahren unter Verwendung eines Vorformling (1) für einen Innenbeutelbehälter nach einem der Ansprüche 1 bis 7 und eines Vorformling (3) für einen Außenbehälter ausgebildet sind,
wobei der Doppelstrukturbehälter (30) einen Körper (33) aufweist, auf dem dünne Kontraktionskontrollabschnitte (50) an einer Mehrzahl von Stellen in Abständen in der Umfangsrichtung ausgebildet sind und sich die dünnen Kontraktionskontrollabschnitte (50) wie Streifen in der axialen Richtung erstrecken.

9. Doppelstrukturbehälter (30) nach Anspruch 8, wobei die minimale Dicke t' an den dünnen Kontraktionskontrollabschnitten (50) nicht mehr als 70 % der Dicke T' an einem anderen Teil als den dünnen Abschnitten beträgt, wenn in einem Draufsichtquerschnitt betrachtet.

## Revendications

1. Préforme de conteneur de sac intérieur (1) à utiliser dans la production d'un conteneur à double structure (30) par moulage par étirage-soufflage simultané selon un procédé de préforme empilée, le conteneur à double structure (30) comprenant un conteneur extérieur (41) et un conteneur de sac intérieur (31) logé dans le conteneur extérieur (41),
la préforme de conteneur de sac intérieur (1) est formée dans son ensemble comme un tube à essai ayant un col (5) destiné à être positionné à l'intérieur d'une bouche (11) qui est une partie non moulée par étirement de la préforme de conteneur extérieur (3) lorsque la préforme de conteneur de sac intérieur (1) est logée à l'intérieur de la préforme de conteneur extérieur (3), un corps (7) se connectant au col (5) et à un fond (9) pour fermer l'extrémité inférieure du corps (7), et
des rainures de contrôle de contraction (10) sont formées au niveau d'une pluralité de sites à intervalles dans la direction circonférentielle sur la surface intérieure ou la surface extérieure du corps (7), et les rainures s'étendent linéairement dans la direction axiale, et dans laquelle l'épaisseur minimale t au niveau des rainures de contrôle de contraction (10) ne dépasse pas 80% de l'épaisseur T au niveau d'une partie autre que les rainures, vue dans une coupe transversale plane du corps (7).

2. Préforme de conteneur de sac intérieur (1) selon la revendication 1, dans laquelle l'épaisseur minimale t au niveau des rainures de contrôle de contraction (10) n'est pas inférieure à 200 µm.

3. Préforme de conteneur de sac intérieur (1) selon la revendication 1, dans laquelle la largeur w au niveau des rainures de contrôle de contraction (10) est comprise dans une plage de 0,2 à 8 mm lorsqu'elle est vue dans une coupe transversale plane du corps (7).

4. Préforme de conteneur de sac intérieur (1) selon la revendication 1, dans laquelle la pluralité de rainures de contrôle de contraction (10) sont disposées de manière symétrique par points lorsqu'elles sont vues dans une coupe transversale plane du corps (7).

5. Préforme de conteneur de sac intérieur (1) selon la revendication 1, dans laquelle la pluralité de rainures de contrôle de contraction (10) sont formées en deux à quatre sites lorsqu'elles sont vues dans une coupe transversale plane du corps (7).

6. Préforme de conteneur de sac intérieur (1) selon la revendication 1, dans laquelle les rainures de contrôle de contraction (10) ont une longueur axiale L d'au moins 30 % par rapport à la hauteur H du corps (7).

7. Préforme de conteneur de sac intérieur (1) selon la revendication 1, dans laquelle les rainures de contrôle de contraction (10) sont formées sur la surface intérieure du corps (7).

8. Conteneur à double structure (30) comprenant un conteneur de sac intérieur (31) et un conteneur extérieur (41) formé par moulage par étirage-soufflage simultané selon un procédé de préforme empilée utilisant une préforme de conteneur de sac intérieur (1) selon l'un quelconque des revendications 1 à 7 et une préforme de conteneur extérieur (3),
le conteneur à double structure (30) comporte un corps (33) sur lequel des parties minces de contrôle de contraction (50) sont formées en une pluralité de sites à intervalles dans la direction circonférentielle, et les parties minces de contrôle de contraction (50) s'étendent comme bandes dans la direction axiale.

9. Conteneur à double structure (30) selon la revendication 8, dans lequel l'épaisseur minimale t' au niveau des parties minces de contrôle de contraction (50) ne dépasse pas 70 % de l'épaisseur T' au niveau d'une partie autre que les parties minces lorsqu'elles sont vues dans une coupe transversale plane.
